# EUROPÄISCHE PATENTANMELDUNG

(11) **EP 4 831 525 A1**
(43) Veröffentlichungstag der Anmeldung: **28.10.2026**
(21) Anmeldenummer: 26173375.2
(22) Anmeldetag: 20.04.2026
(51) Int. Cl.: F16L 21/03, F16L 27/10, F16L 37/52

(54) **ANSCHLUSSVORRICHTUNG FÜR EINE ROHRLEITUNG**

(30) Priorität: 25.04.2025 AT 502802025
(71) Anmelder: E. Hawle Armaturenwerke GmbH, 4840 Vöcklabruck (AT)
(72) Erfinder: Oberegger, Gerald, 4800 Attnang-Puchheim (AT)
(74) Vertreter: Puchberger & Partner Patentanwälte

(57) **Zusammenfassung**

Die Erfindung betrifft eine Anschlussvorrichtung für eine Rohrleitung (1) umfassend ein hohlzylindrisch ausgebildetes Gehäuse (2), wobei das Gehäuse (2) eine Anschlusseinrichtung (3) aufweist, wobei das Gehäuse (2) eine Muffe (5) mit einer im Wesentlichen kreisförmigen Einstecköffnung (4) zur Aufnahme der Rohrleitung (1) bildet, wobei am inneren Umfang der Muffe (5) eine ringförmige Nut (6) vorgesehen ist, in der ein Dichtring (7) angeordnet ist, und wobei am inneren Umfang der Muffe (5) eine ringförmig umlaufende Kammer (8) zur Aufnahme eines im Wesentlichen ringförmigen Klemmelements (9) zum formschlüssigen Fixieren einer in die Einstecköffnung (4) eingeführten Rohrleitung (1) vorgesehen ist. Die Kammer (8) ist größer als das Klemmelement (9) und das Klemmelement (9) ist innerhalb der Kammer (8) frei beweglich gelagert, wobei eine Fixiereinrichtung (10) zur kraftschlüssigen Fixierung des Klemmelements (9) an der Rohrleitung (1) vorgesehen ist, und wobei die Muffe (5) zumindest eine radiale Ausnehmung (11) aufweist, wobei das Klemmelement (9) derart in der Kammer (8) angeordnet ist, dass die Fixiereinrichtung (10) durch die Ausnehmung (11) von außen zugänglich ist.

## Beschreibung

Die Erfindung betrifft eine Anschlussvorrichtung zur Verbindung einer Rohrleitung mit anderen Rohrleitungskomponenten.

Im Stand der Technik sind Anschlussvorrichtungen bekannt, die vielseitig in Rohrleitungssystemen einsetzbar sind, um beispielsweise Rohre verschiedener Durchmesser zu verbinden, Winkel zu erzeugen oder Übergänge zu ermöglichen.

Häufig verwendete Anschlussvorrichtungen basieren auf Gewinden, die durch Drehen ineinander geschraubt werden, um eine dichte Verbindung zu schaffen. Andere Anschlussvorrichtungen umfassen Pressfittings, bei denen ein Fitting mit einem speziellen Werkzeug auf das Rohr gepresst wird. Durch den Druck wird ein Dichtring in das Fitting gedrückt und sorgt für eine dichte Verbindung.

Anschlussvorrichtungen sind üblicherweise so ausgestaltet, dass eine Verbindung mit einem Rohr nur in einem einzigen Winkel möglich ist. Es ist daher notwendig, präzise zu arbeiten und es gibt kaum räumlichen Spielraum für die Ausgestaltung von Rohrleitungssystemen.

Ferner ist für die Demontage von Anschlussvorrichtungen oft ein spezielles Zusatz- oder Hilfswerkzeug notwendig, um die Rohrleitung und die Anschlussvorrichtung wieder voneinander zu trennen. Es kann daher bei der Demontage zu einer nicht-reversiblen Zerstörung der Dichtung oder anderer Komponenten der Anschlussvorrichtung kommen. Die Anschlussvorrichtungen müssen in weiterer Folge ausgetauscht werden und können nicht wiederverwendet werden.

Ziel der vorliegenden Erfindung ist es, diese und weitere Probleme zu überwinden.

Insbesondere ist es eine Aufgabe der Erfindung, eine wiederverwendbare Anschlussvorrichtung zur Verfügung zu stellen. Eine weitere Aufgabe der Erfindung kann sein, eine besonders leicht demontierbare Anschlussvorrichtung zur Verfügung zu stellen. Eine Aufgabe der Erfindung kann ferner sein, eine Anschlussvorrichtung zur Verfügung zu stellen, die ohne Spezialwerkzeug montiert und demontiert werden kann. Eine weitere Aufgabe der Erfindung ist es, eine dichte Anschlussvorrichtung zur Verfügung zu stellen, in der eine Rohrleitung flexibel montiert werden kann.

Diese und weitere Aufgaben werden durch eine Anschlussvorrichtung gemäß den Patentansprüchen gelöst.

Die Erfindung betrifft eine Anschlussvorrichtung für eine Rohrleitung. Die Anschlussvorrichtung umfasst ein im Wesentlichen hohlzylindrisch ausgebildetes Gehäuse. Das Gehäuse weist eine Anschlusseinrichtung, vorzugsweise mit einem Gewinde, insbesondere einem Außengewinde, auf. Das Gehäuse umfasst eine Muffe mit einer im Wesentlichen kreisförmigen Einstecköffnung zur Aufnahme der Rohrleitung, wobei am inneren Umfang der Muffe eine ringförmige Nut vorgesehen ist, in der ein Dichtring angeordnet ist. Ferner ist am inneren Umfang der Muffe eine ringförmig umlaufende Kammer zur Aufnahme eines im Wesentlichen ringförmigen Klemmelements zum formschlüssigen Fixieren einer in die Einstecköffnung eingeführten Rohrleitung vorgesehen. Die Kammer ist größer als das Klemmelement und das Klemmelement ist innerhalb der Kammer frei beweglich gelagert, wobei eine Fixiereinrichtung zur kraftschlüssigen Fixierung des Klemmelements an der Rohrleitung vorgesehen ist.

Die Muffe weist zumindest eine radiale Ausnehmung auf, wobei das Klemmelement derart in der Kammer angeordnet ist, dass die Fixiereinrichtung durch die Ausnehmung von außen zugänglich ist.

Dadurch kann das Klemmelement von außen festgezogen oder gelockert werden, um eine Rohrleitung zu befestigen oder zu entfernen.

Das Gehäuse kann aus Metall oder Kunststoff ausgebildet sein. Der Dichtring kann Kunststoff, insbesondere ein hochelastisches Elastomer, umfassen oder daraus bestehen. Das Klemmelement kann Metall oder Kunststoff, vorzugsweise ein Hartplastik, umfassen oder daraus bestehen. Das Klemmelement kann insbesondere einstückig sein.

Die Fixiervorrichtung umfasst oder besteht vorzugsweise aus Metall. Die Fixiervorrichtung kann aber auch andere Materialien umfassen. Das Gewinde der Anschlusseinrichtung umfasst oder besteht vorzugsweise aus Metall oder Kunststoff. Die Anschlusseinrichtung kann beispielweise als Anschlussstutzen, als Innengewinde oder als Steckverbindung ausgebildet sein. Das Gehäuse der Anschlussvorrichtung ist gegebenenfalls korrosionsbeständig ausgebildet.

Die Anschlussvorrichtung ist vorzugsweise zur Aufnahme von Rohrleitungen mit einem Durchmesser zwischen etwa 2 cm bis etwa 20 cm ausgebildet. Die Dimensionierung der Anschlussvorrichtung ist an die jeweiligen Rohrleitungen angepasst. Die Rohrleitungen können gemäß EN 12201-2 und DIN 8074 ausgebildet sein.

Es kann vorgesehen sein, dass der Innendurchmesser d₁ des Gehäuses im Bereich der Anschlusseinrichtung geringer ist als der Innendurchmesser d₂ des Gehäuses im Bereich der Einstecköffnung, wobei am inneren Umfang des Gehäuses ein Anschlag für die Rohrleitung gebildet ist, und wobei sich der Innendurchmesser d₂ des Gehäuses vom Anschlag in Richtung zur Einstecköffnung im Bereich eines Anschlagabschnitts konisch verengt. Es kann vorgesehen sein, dass sich der Anschlagabschnitt vorzugsweise über etwa 10% bis etwa 20% der Länge des Gehäuses erstreckt. Der Anschlagabschnitt kann als ringförmige Nut mit einer Tiefe von etwa 15% bis etwa 20% des Innendurchmessers des Gehäuses ausgebildet sein.

Durch den Anschlag kann die Rohrleitung nur bis zu diesem Punkt in das Gehäuse eingeführt werden, sodass die Rohrleitung nicht vollständig durch die Anschlussvorrichtung durchgesteckt werden kann.

Gegebenenfalls ist vorgesehen, dass der Durchmesser d_{A1} des Anschlagabschnitts an seiner weitesten Stelle mindestens so groß ist wie der Durchmesser d₂ der Einstecköffnung, und der Durchmesser d_{A2} des Anschlagabschnitts an seiner engsten Stelle kleiner ist als der Durchmesser d₂ der Einstecköffnung.

Hierdurch kann eine in die Anschlussvorrichtung eingesteckte Rohrleitung mit einer Neigung in der Anschlussvorrichtung angeordnet werden.

Es kann vorgesehen sein, dass sich der Anschlagabschnitt in Richtung von der Einstecköffnung zur Anschlusseinrichtung in einem Winkel von etwa 2° bis etwa 6°, insbesondere etwa 5° relativ zu einer Längsachse L des Gehäuses konisch erweitert. Dadurch kann die Rohrleitung in einem entsprechenden Winkel gegenüber der Anschlussvorrichtung angeordnet werden.

Gegebenenfalls ist vorgesehen, dass das Klemmelement als ein zum Umfassen der Rohrleitung ausgebildeter Klemmring, gegebenenfalls als geschlitzter Klemmring oder Klemmring mit Scharnier, ausgebildet ist. Das Klemmelement ist dadurch in seiner Größe flexibel. Hierdurch kann das Klemmelement gelockert werden, um die Rohrleitung aufzunehmen, und festgezogen werden, um die Rohrleitung zu fixieren.

Es kann vorgesehen sein, dass die Fixiereinrichtung zum Zusammendrücken des Klemmelements ausgebildet ist, insbesondere in Form einer Spannschraube oder einer Schnellspannvorrichtung.

Gegebenenfalls ist vorgesehen, dass die Nut für den Dichtring in Richtung der Einstecköffnung angrenzend an den Anschlagabschnitt liegt. Die Nut kann eine Tiefe von etwa 15% bis etwa 20% des Innendurchmessers des Gehäuses aufweisen.

Es kann vorgesehen sein, dass die Kammer für das Klemmelement in Richtung der Einstecköffnung angrenzend an die Nut angeordnet ist. Die Kammer kann eine Tiefe von etwa 15% bis etwa 20% des Innendurchmessers des Gehäuses aufweisen.

Gegebenenfalls ist vorgesehen, dass die Nut und die Kammer durch einen im Wesentlichen ringförmigen Materialsteg voneinander getrennt angeordnet sind. Hierdurch kann verhindert werden, dass sich der Dichtring und das Klemmelement im Betrieb berühren.

Es kann vorgesehen sein, dass der innere Durchmesser d_{M} der Muffe am Materialsteg größer ist als der Durchmesser d_{A2} des Anschlagabschnitts an seiner engsten Stelle. Hierdurch kann eine in die Anschlussvorrichtung eingeführte Rohrleitung besser mit einer Neigung angeordnet werden.

Gegebenenfalls ist vorgesehen, dass der innere Durchmesser d_{M} der Muffe am Materialsteg kleiner oder gleich dem Durchmesser d₂ der Einstecköffnung ist. Hierdurch kann eine in die Anschlussvorrichtung eingeführte Rohrleitung besser mit einer Neigung angeordnet werden.

Es kann vorgesehen sein, dass der Anschlagabschnitt etwa in der Mitte des Gehäuses zwischen Einstecköffnung und Anschlusseinrichtung angeordnet ist. Beispielsweise kann sich der Anschlagabschnitt beidseitig über die Mitte des Gehäuses zwischen Einstecköffnung und Anschlusseinrichtung erstrecken. Dadurch ist ausreichend Platz für die übrigen Komponenten, wie die Nut und den Dichtring oder die Kammer und das Klemmelement, welche in Richtung der Einstecköffnung angeordnet sein können.

Gegebenenfalls ist vorgesehen, dass sich die Nut über etwa 5% bis etwa 10% der Länge des Gehäuses erstreckt. Ebenso kann vorgesehen sein, dass sich die Kammer über etwa 15% bis etwa 25% der Länge des Gehäuses erstreckt.

Die Erfindung erstreckt sich ferner auf eine Rohrleitung mit einer erfindungsgemäßen Anschlussvorrichtung.

Weitere erfindungsgemäße Merkmale ergeben sich aus den Ansprüchen, der Beschreibung der Ausführungsbeispiele und den Figuren. Die Erfindung wird nachfolgend anhand von Figuren erläutert, welche exemplarische Ausführungsbeispiele zeigen:
Fig. 1a zeigt eine schematische Schrägansicht einer erfindungsgemäßen Anschlussvorrichtung, in der eine Rohrleitung angeordnet ist.
Fig. 1b zeigt eine schematische Schrägansicht des Klemmelements der Fig. 1a.
Fig. 2 zeigt eine schematische Querschnittsansicht der erfindungsgemäßen Anschlussvorrichtung der Fig. 1a, in der eine Rohrleitung angeordnet ist.
Fig. 3 zeigt eine schematische Querschnittsansicht des erfindungsgemäßen Gehäuses der Fig. 1a.

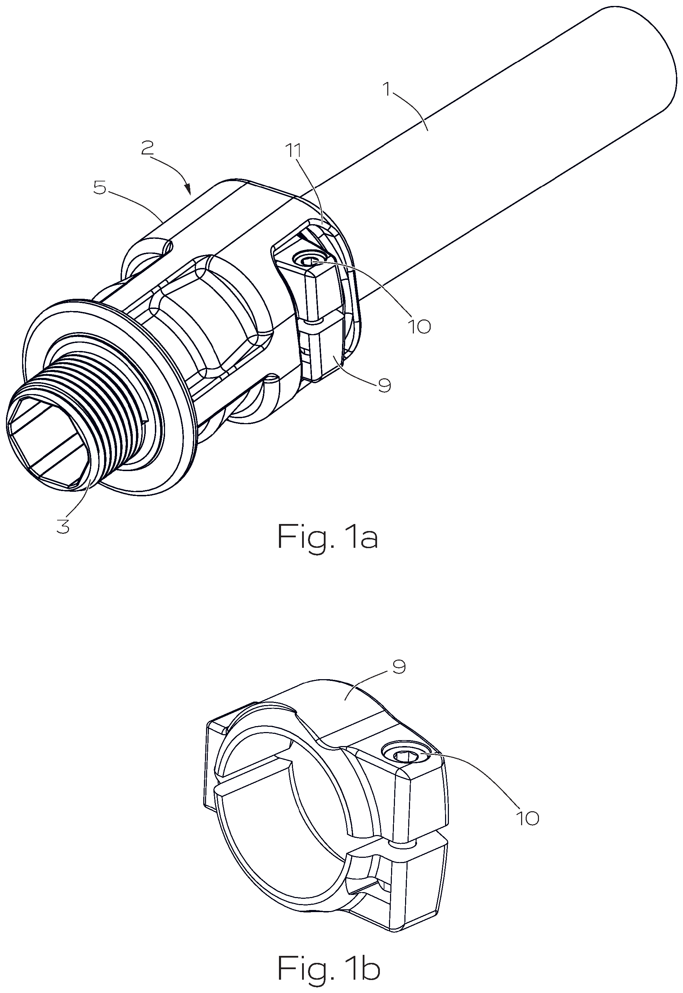

**Fig. 1a** zeigt eine schematische Schrägansicht einer erfindungsgemäßen Anschlussvorrichtung von außen, in der eine Rohrleitung 1 eingesteckt ist. **Fig. 1b** zeigt eine schematisch Schrägansicht eines in der Anschlussvorrichtung der Fig. 1a angeordneten Klemmelements 9. Die Rohrleitung 1 ist vorzugsweise als Kunststoffrohr, beispielsweise als PE-Rohr oder PVC-Rohr ausgebildet. Die Anschlussvorrichtung umfasst ein im Wesentlichen hohlzylindrisches Gehäuse 2. An einem Ende des Gehäuses 2 ist eine Anschlusseinrichtung 3, welche in diesem Ausführungsbeispiel als Anschlussstutzen ausgebildet ist, angeordnet. Die Anschlusseinrichtung 3 weist zur Befestigung an Rohrleitungskomponenten ein Gewinde an seinem äußeren Umfang auf. Das Klemmelement 9 ist in diesem Ausführungsbeispiel einstückig ausgebildet.

Das Gehäuse 2 umfasst ferner eine Muffe 5 mit einer im Wesentlichen kreisförmigen Einstecköffnung 4 zur Aufnahme der Rohrleitung 1. Die Rohrleitung 1 ist im Ausführungsbeispiel der Fig. 1a in die Muffe 5 eingesteckt. Am inneren Umfang der Muffe 5 ist eine (nicht dargestellte) ringförmig umlaufende Kammer 8 vorgesehen. In dieser Kammer 8 ist ein im Wesentlichen ringförmiges Klemmelement 9 angeordnet. Das Klemmelement 9 ist hier als Klemmring ausgebildet und dient zum formschlüssigen Fixieren der in die Einstecköffnung 4 eingeführten Rohrleitung 1.

Die Anschlussvorrichtung umfasst ferner eine Fixiereinrichtung 10 zur kraftschlüssigen Fixierung des Klemmelements 9 an der Rohrleitung 1. Die Fixiereinrichtung 10 ist in diesem Ausführungsbeispiel als Spannschraube ausgebildet.

Die Muffe 5 weist eine radiale Ausnehmung 11 auf. Die radiale Ausnehmung 11 ist in diesem Ausführungsbeispiel im Bereich der Kammer 8 angeordnet. Das Klemmelement 9 ist derart in der Kammer 8 angeordnet, dass die Fixiereinrichtung 10 durch die Ausnehmung 11 nach außen ragt. Dadurch ist die Fixiereinrichtung 10 jederzeit von außen zugänglich. Es kann vorgesehen sein, dass das die Ausnehmung 11 derart ausgebildet ist, dass das Klemmelement 9 seitlich aus der Kammer 8 entfernt werden kann, wenn keine Rohrleitung 1 in die Muffe 5 eingesteckt ist. Das Klemmelement 9 ist derart in der Kammer 8 angeordnet, dass es nicht in Richtung der Einstecköffnung 4 aus der Muffe gezogen werden kann.

Durch das Festziehen der Fixiereinrichtung 10, in diesem Fall der Spannschraube, verkleinert sich der Durchmesser des Klemmelements 9, in diesem Fall des Klemmrings. Dadurch wird die eingesteckte Rohrleitung 1 durch den radialen Druck des Klemmelements 9 in der Muffe 5 gehalten. Wenn die Verbindung wieder gelöst werden soll, kann die Fixiereinrichtung 10 gelockert werden, sodass sich der Durchmesser des Klemmrings vergrößert und die Rohrleitung 1 freigegeben wird.

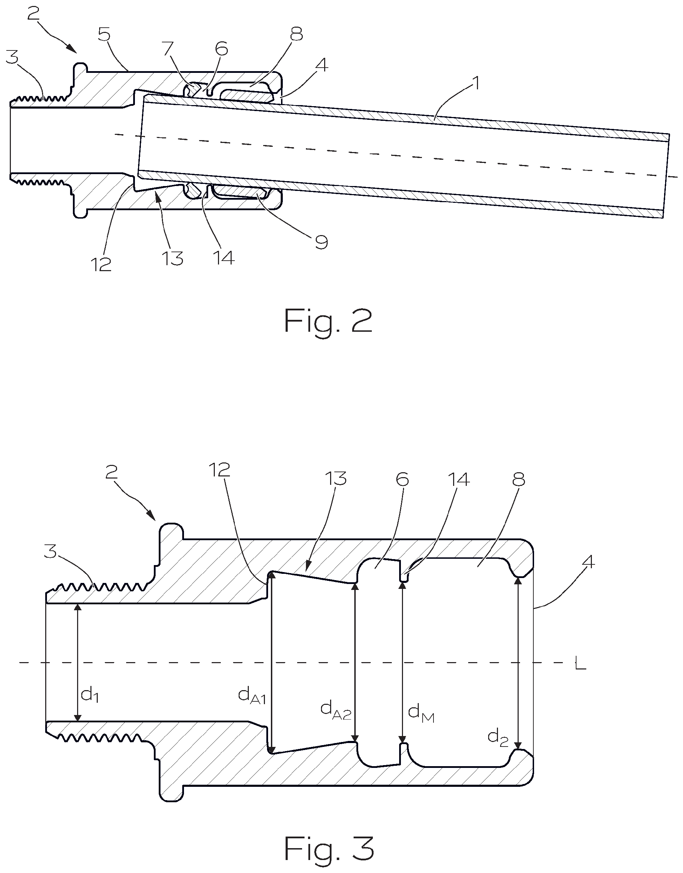

**Fig. 2** zeigt eine schematische Querschnittsansicht der erfindungsgemäßen Anschlussvorrichtung der Fig. 1a, in der eine Rohrleitung 1 angeordnet ist. **Fig. 3** zeigt eine schematische Querschnittsansicht der erfindungsgemäßen Anschlussvorrichtung der Fig. 1a ohne Dichtring 7, Klemmelement 9 und Rohrleitung 1.

Am inneren Umfang der Muffe 5 ist eine ringförmige Nut 6 angeordnet. Die Nut 6 erstreckt sich etwa über 5 bis 10% der Länge des Gehäuses 2. In der Nut 6 ist ein Dichtring 7 angeordnet. Der Dichtring besteht hier im Wesentlichen aus einem hochelastischen Elastomer. Am inneren Umfang der Muffe 5 ist ferner die ringförmige umlaufende Kammer 8 angeordnet, in der das Klemmelement 9 zum formschlüssigen Fixieren der in der eingesteckten Rohrleitung 1 angeordnet ist.

Die Kammer 8 ist größer als das Klemmelement 9, sodass das Klemmelement 9 frei beweglich innerhalb der Kammer 8 gelagert ist. Die Kammer 8 erstreckt sich über etwa 15% bis etwa 25% der Länge des Gehäuses 2.

Der Innendurchmesser d₁ des Gehäuses 2 im Bereich der Anschlusseinrichtung 3 ist kleiner als der Innendurchmesser d₂ des Gehäuses 2 im Bereich der Einstecköffnung 4. Dadurch wird am inneren Umfang des Gehäuses 2 ein Anschlag 12 für die Rohrleitung 1 gebildet. Der Innendurchmesser des Gehäuses 2 verengt sich vom Anschlag 12 in Richtung der Einstecköffnung 4 konisch. Es handelt sich bei dem Bereich, in dem sich das Gehäuse 2 konisch verengt um einen Anschlagabschnitt 13. Der Anschlagabschnitt 13 erstreckt sich vorzugsweise über etwa 10% bis etwa 20% der Länge des Gehäuses 2. Der Anschlagabschnitt 13 ist etwa in der Mitte des Gehäuses 2 zwischen Einstecköffnung 4 und Anschlusseinrichtung 3 angeordnet.

Die Nut 6 für die Aufnahme des Dichtrings 7 ist in Richtung der Einstecköffnung 4 angrenzend an den Anschlagabschnitt 13 angeordnet. Die Kammer 8 für das Klemmelement 9 ist in Richtung der Einstecköffnung 4 angrenzend an die Nut 6 angeordnet. Die Nut 6 und die Kammer 8 sind durch einen im Wesentlichen ringförmigen Materialsteg 14 voneinander getrennt angeordnet.

Der Durchmesser d_{A1} des Anschlagabschnitts 13 an seiner weitesten Stelle ist mindestens so groß wie der Durchmesser d₂ der Einstecköffnung 4. In diesem Ausführungsbeispiel ist der Durchmesser d_{A1} größer als der Durchmesser d₂. Der Durchmesser d_{A2} des Anschlagabschnitts 13 ist an seiner engsten Stelle kleiner als der Durchmesser d₂ der Einstecköffnung 4.

Der Anschlagabschnitt 13 erweitert sich konisch in Richtung von der Einstecköffnung 4 Anschlusseinrichtung 3 in einem Winkel von etwa 5° relativ zu einer Längsachse L des Gehäuses 2. Der innere Durchmesser d_{M} der Muffe 5 am Materialsteg 14 ist größer als der Durchmesser d_{A2} des Anschlagabschnitts 13 an seiner engsten Stelle. Der Durchmesser d_{M} der Muffe 5 am Materialsteg 14 ist kleiner oder gleich dem Durchmesser d₂ der Einstecköffnung 4.

Die inneren Durchmesser des Gehäuses 2 sind so gewählt, dass für eine eingesteckte, nicht durch das Klemmelement 9 befestigte Rohrleitung 1 die Neigung eingestellt werden kann. Wenn die Rohrleitung 1 in einem gewünschten Neigungswinkel angeordnet ist, kann das Klemmelement 9 durch die Fixiereinrichtung 10 festgezogen werden, sodass die Rohrleitung 1 in der Anschlussvorrichtung arretiert ist. Es kann jedoch auch möglich sein, den Neigungswinkel nach dem Fixieren des Klemmelements 9 mit der Fixiereinrichtung 10 zu verändern.

### Bezugszeichenliste

- 1: Rohrleitung
- 2: Gehäuse
- 3: Anschlusseinrichtung
- 4: Einstecköffnung
- 5: Muffe
- 6: Nut
- 7: Dichtring
- 8: Kammer
- 9: Klemmelement
- 10: Fixiereinrichtung
- 11: Ausnehmungen
- 12: Anschlag
- 13: Anschlagabschnitt
- 14: Materialsteg

## Patentansprüche

1. Anschlussvorrichtung für eine Rohrleitung (1), umfassend ein im Wesentlichen hohlzylindrisch ausgebildetes Gehäuse (2), wobei
a. das Gehäuse (2) eine Anschlusseinrichtung (3), vorzugsweise mit einem Gewinde, insbesondere einem Außengewinde, aufweist, wobei
b. das Gehäuse (2) eine Muffe (5) mit einer im Wesentlichen kreisförmigen Einstecköffnung (4) zur Aufnahme der Rohrleitung (1) bildet, wobei
c. am inneren Umfang der Muffe (5) eine ringförmige Nut (6) vorgesehen ist, in der ein Dichtring (7) angeordnet ist, und wobei
d. am inneren Umfang der Muffe (5) eine ringförmig umlaufende Kammer (8) zur Aufnahme eines im Wesentlichen ringförmigen Klemmelements (9) zum formschlüssigen Fixieren einer in die Einstecköffnung (4) eingeführten Rohrleitung (1) vorgesehen ist,
**dadurch gekennzeichnet, dass**
e. die Kammer (8) größer als das Klemmelement (9) ist und das Klemmelement (9) innerhalb der Kammer (8) im Wesentlichen frei beweglich gelagert ist, wobei
f. eine Fixiereinrichtung (10) zur kraftschlüssigen Fixierung des Klemmelements (9) an der Rohrleitung (1) vorgesehen ist, und wobei
g. die Muffe (5) zumindest eine radiale Ausnehmung (11) aufweist, wobei das Klemmelement (9) derart in der Kammer (8) angeordnet ist, dass die Fixiereinrichtung (10) durch die Ausnehmung (11) von außen zugänglich ist.

2. Anschlussvorrichtung nach Anspruch 1, **dadurch gekennzeichnet, dass** der Innendurchmesser d₁ des Gehäuses (2) im Bereich der Anschlusseinrichtung (3) geringer ist als der Innendurchmesser d₂ des Gehäuses (2) im Bereich der Einstecköffnung (4), wobei am inneren Umfang des Gehäuses (2) ein Anschlag (12) für die Rohrleitung (1) gebildet ist, und wobei sich der Innendurchmesser des Gehäuses (2) vom Anschlag (12) in Richtung zur Einstecköffnung (4) im Bereich eines Anschlagabschnitts (13) konisch verengt.

3. Anschlussvorrichtung nach Anspruch 2, **dadurch gekennzeichnet, dass** sich der Anschlagabschnitt (13) vorzugsweise über etwa 10% bis etwa 20% der Länge des Gehäuses (2) erstreckt.

4. Anschlussvorrichtung nach Anspruch 2 oder 3, **dadurch gekennzeichnet, dass**
a. der Durchmesser d_{A1} des Anschlagabschnitts (13) an seiner weitesten Stelle mindestens so groß wie der Durchmesser d₂ der Einstecköffnung (4) ist, und
b. der Durchmesser d_{A2} des Anschlagabschnitts (13) an seiner engsten Stelle kleiner ist als der Durchmesser d₂ der Einstecköffnung (4).

5. Anschlussvorrichtung nach einem der Ansprüche 2 bis 4, **dadurch gekennzeichnet, dass** sich der Anschlagabschnitt (13) in Richtung von der Einstecköffnung (4) zur Anschlusseinrichtung (3) in einem Winkel von etwa 2° bis etwa 6°, insbesondere etwa 5° relativ zu einer Längsachse L des Gehäuses 2 konisch erweitert.

6. Anschlussvorrichtung nach einem der Ansprüche 1 bis 5, **dadurch gekennzeichnet, dass** das Klemmelement (9) als ein zum Umfassen der Rohrleitung (1) ausgebildeter Klemmring, gegebenenfalls als geschlitzter Klemmring oder Klemmring mit Scharnier, ausgebildet ist.

7. Anschlussvorrichtung nach einem der Ansprüche 1 bis 6, **dadurch gekennzeichnet, dass** die Fixiereinrichtung (10) zum Zusammendrücken des Klemmelements (9) ausgebildet ist, insbesondere in Form einer Spannschraube.

8. Anschlussvorrichtung nach einem der Ansprüche 2 bis 7, **dadurch gekennzeichnet, dass** die Nut (6) für die Aufnahme des Dichtrings (7) in Richtung der Einstecköffnung (4) angrenzend an den Anschlagabschnitt (13) angeordnet ist.

9. Anschlussvorrichtung nach einem der Ansprüche 2 bis 8, **dadurch gekennzeichnet, dass** die Kammer (8) für die Aufnahme des Klemmelements (9) in Richtung der Einstecköffnung (4) an die Nut (6) angrenzend angeordnet ist.

10. Anschlussvorrichtung nach einem der Ansprüche 1 bis 9, **dadurch gekennzeichnet, dass** die Nut (6) und die Kammer (8) durch einen im Wesentlichen ringförmigen Materialsteg (14) voneinander getrennt angeordnet sind.

11. Anschlussvorrichtung nach Anspruch 10, **dadurch gekennzeichnet, dass** der innere Durchmesser d_{M} der Muffe (5) am Materialsteg (14) größer ist als der Durchmesser d_{A2} des Anschlagabschnitts (13) an seiner engsten Stelle.

12. Anschlussvorrichtung nach einem der Ansprüche 10 oder 11, **dadurch gekennzeichnet, dass** der innere Durchmesser d_{M} der Muffe (5) am Materialsteg (14) kleiner oder gleich dem Durchmesser d₂ der Einstecköffnung (4) ist.

13. Anschlussvorrichtung nach einem der Ansprüche 2 bis 12, **dadurch gekennzeichnet, dass** der Anschlagabschnitt (13) etwa in der Mitte des Gehäuses (2) zwischen Einstecköffnung (4) und Anschlusseinrichtung (3) angeordnet ist und sich vorzugsweise beidseitig über die Mitte des Gehäuses (2) zwischen Einstecköffnung (4) und Anschlusseinrichtung (3) erstreckt.

14. Anschlussvorrichtung nach einem der Ansprüche 1 bis 13, **dadurch gekennzeichnet, dass** sich die Nut (6) über etwa 5% bis etwa 10% der Länge des Gehäuses (2) erstreckt, und/oder
**dass** sich die Kammer (8) über etwa 15% bis etwa 25% der Länge des Gehäuses (2) erstreckt.

15. **Rohrleitung (1), dadurch gekennzeichnet, dass** die Rohrleitung (1) mit einer Anschlussvorrichtung nach einem der vorhergehenden Ansprüche verbunden ist.
